# EUROPEAN PATENT APPLICATION

(11) **EP 4 421 772 A1**
(43) Date of publication of application: **28.08.2024**
(21) Application number: 23158834.4
(22) Date of filing: 27.02.2023
(51) Int. Cl.: G08G 1/00

(54) **METHOD FOR CALLING THE ATTENTION OF A DRIVER**

(71) Applicant: Continental Automotive Technologies GmbH, 30175 Hannover (DE)
(72) Inventor: Freitag, Carmen, 60488 Frankfurt am Main (DE); von Bychowski, Heidi, 60488 Frankfurt am Main (DE); CREMONESE, Sylvain, 60488 Frankfurt am Main (DE); Lim, Mei Qing, 60488 Frankfurt am Main (DE); Oh, Cindy, 60488 Frankfurt am Main (DE); Zhang, Yuxing, 60488 Frankfurt am Main (DE); BOUCHARD, Christian, 60488 Frankfurt am Main (DE)
(74) Representative: Continental Corporation

(57) **Abstract**

A method 100 for calling the attention of a driver 102 of a vehicle 104 to events 132 in a blind spot 118 of the vehicle 104 caused by an opaque structure 156 of the vehicle 104, comprises a receiving step 106, in which image data 108 recorded by at least one camera 110 that covers the blind spot 118 of the vehicle 104 are received. In a detection step 128, an event 132 is detected based on a pre-defined pattern 130 within the received image data 108. In a modification step 134, the image data 108 recorded by the at least one camera 110 is modified into a modified image 136, such that the event 132 is highlighted. In a display step 141, said modified image 136 is shown on at least one display module 140, whereas the display module 140 is arranged on the opaque structure 156 of the vehicle 104 on the inside of the vehicle 104.

## Description

### Field of Invention

The present disclosure relates to a method and a system to enhance road safety. More particularly, the present disclosure relates to a method to call the attention of a driver to events in a blind spot of a vehicle and a system thereof. Also, a display system is disclosed.

### Technical Background

Improving safety measures for drivers is an important objective for all vehicle manufacturers. Some unsafe traffic situations are caused by the inability of the driver of a vehicle to observe traffic relevant events due to opaque structures of the vehicle body. Such opaque structures usually are parts of the vehicle body which provide the mechanical stiffness necessary for passenger safety in the case of an accident. Examples for such opaque structures are the A-, B-, and C-pillar. However, the opaque structures interfere with the visual field of the vehicle driver creating a blind spot, and can obscure traffic-safety-relevant events or objects such as a pedestrian about to cross the street, a bicycle driver, or an overtaking car. The opposing requirements of high stiffness and a large visual field usually require a compromise.

EP 1 878 618 B1 discloses driving a support method and an apparatus for capturing an image of a blind spot of the driver of a vehicle arising because of the presence of a pillar of the vehicle. A display on the inner side of the pillar is formed to show images taken by imaging means which capture the blind spot. The position of the driver is detected and the image to show on the display on the inner side of the pillar is chosen based on the detected position of the driver.

Both US 10 604 073 B2 and US 11 267 514 B2 also disclose methods and/or apparatuses for a transparent A-pillar.

### Summary of the Invention

The object of the present invention is to provide a method to call the attention of a driver to events in a blind spot of a vehicle and a system thereof, eliminating the disadvantages of the state-of-the-art.

The object is met by the subject-matter of the independent claims. Advantageous embodiments of the invention are subject-matter of the dependent claims.

A first aspect of the present disclosure introduces a method for calling the attention of a driver of a vehicle to events in a blind spot of the vehicle caused by an opaque structure of the vehicle. The method comprises a receiving step of receiving, via a receiving module, image data recorded by at least one camera that covers the blind spot of the vehicle. In a detection step, an event is detected, via a detection module, based on a pre-defined pattern within the received image data. In a modification step, the image data recorded by the at least one camera is modified, via a modification module, into a modified image, such that the event is highlighted. In a display step, the modified image is shown on at least one display module, whereas the display module is arranged on the opaque structure of the vehicle on the inside of the vehicle.

Examples for the opaque structure of the vehicles include the A-, B-, and C-pillar but also a rear-window frame. These opaque structures interfere with the visual field of the driver, creating a blind spot of the vehicle. In other words, the driver cannot see directly any objects or events in the area of the blind spot.

In the receiving step of the disclosed method, image data, recorded by at least one camera that covers the blind spot of the vehicle, are received by a receiving module. The at least one camera is mounted in the inside or the outside of the vehicle, such that it can record image data representing an image from the blind spot, whereas in particular, the blind spot is situated outside of the vehicle. The at least one camera can for example be mounted on the outside of the vehicle, pointing approximately in a direction extending from the driver to the A-pillar. The image data is transmitted from the at least one camera to the receiving module, for example using a wired communication technology like cables, fibers, or the like, or a wireless communication technology like wireless fidelity (Wi-Fi), Bluetooth (BT), Bluetooth Low Energy (BLE), or the like. The receiving module might include a processing unit, a memory unit, and input/output capabilities. It is also possible that the receiving module is a constituent of a bigger system, for example in infotainment system or a high-performance computer (HPC).

Events within the blind spot cannot be fully observed by the driver or might even be missed completely. Examples for events are passing-by bicycle drivers, animals, or pedestrians, an attempt to overtake from other road users, or a road sign.

In the detection step of the method, the detection module detects events within the received image data. For this purpose, the detection module searches for pre-defined patterns within the received image data. Examples for pre-defined patterns are road signs, places of interest, or a person to pick up. Predefined patterns can also be characteristically defined to represent a construction site, moving road users on a collision path with the vehicle, or an attempt to overtake by other road users. The detection module can employ artificial intelligence methods to conduct the search for predefined patterns. An example is a neural network that was trained accordingly. The detection module might include a processing unit, a memory unit, and input/output capabilities. It is also possible that the detection module is a constituent of a bigger system, for example an infotainment system or a HPC.

In the modification step, the modification module modifies the image data recorded by the at least one camera into a modified image. This modification is based on the event detected by the detection module and highlights the event in order to emphasize it. If, for example, the detected event is a pedestrian in the blind spot of the vehicle on a collision course with the vehicle, the modified image can consist of the image of the blind spot including the pedestrian and a red rectangle around the pedestrian. In another example, the detected event is a place of interest like a restaurant, the highlighting might then consist of a pinpoint.

In the display step of the method, the modified image is shown on at least one display module whereas the display module is arranged on the opaque structure of the vehicle on the inside of the vehicle. The highlighting of the event calls the attention of the driver to said event, supporting a sound and safe driving process. Since the modified image also contains the content of the blind spot and is arranged on the opaque structure that caused the blind spot, said opaque structure appears to be transparent. The at least one display module can for example be a liquid crystal display (LCD) module, a light-emitting diode (LED) display module, an E-Ink display module, a gyricon display module, or the like.

The disclosed method ensures an improved field of view for the driver of the vehicle and enhances traffic security by indicating traffic-relevant events directly on the display. Further, the disclosed method is more flexible than existing methods like a blind spot warning mirror, which usually only indicates traffic relevant events using a modest flashlight indicator. Also, the disclosed method increases the comprehension of traffic situations by a clear and augmented description of the nature of traffic-relevant events by translating the raw data, extracted from the at least one camera, into a synthetic and understandable information for the driver of the vehicle. This can help to prevent accidents, support navigation, or provide useful information and warnings.

In an advantageous embodiment, the pre-defined pattern is one or more from the following group: a landmark, a passenger to be picked up, a collision with a road user, a road sign, an overtaking attempt from a road user, an object within the driving path of the vehicle, or a place of interest.

The landmark might refer to a recognizable natural or artificial feature like a mountain, a building, or the like. Places of interest include, but are not limited to, restaurants, cafes, cinemas, shops, or the like.

In an advantageous embodiment, the highlighting of the event is achieved by drawing one or more from the following group: a frame, an icon, a marker, a road sign, a text, an avatar, a person, a vehicle, or a building. The marker might be only partially visible on the display module.

In an advantageous embodiment, in addition to receiving image data recorded by the at least one camera, external data is received by the receiving module. Said external data support the detection module to detect the event. The external data can be provided by any of the following: a web service, a map service, an advertising service, other road users, or the road infrastructure.

In this embodiment, a web service might provide information, such as type and position, about a place of interest that can be used as a pattern to highlight the place of interest more reliably. Also, external data from other road users can be employed to enhance the reliability of detecting an event. For example, other road users can provide events that they themselves have detected. Also, infrastructure elements such as roadside units or traffic lights can provide data that can be used to enhance the reliability of the event detection.

In an advantageous embodiment, additional to receiving image data recorded by the at least one camera, additional sensor data from at least one sensor is received by the receiving module. Said additional sensor data support the detection module to detect the event.

Additional sensor data might be provided from internal or external sources. Internal sources include, but are not limited to, Lidar and Radar sensors. External sources include, but are not limited to, roadside unit cameras or rangefinders.

In an advantageous embodiment, the additional sensor data from the at least one sensor can be chosen out of the group comprising the following sensor types: line-of-sight-detection sensor, Lidar sensor, Radar sensor, pressure sensor, temperature sensor, camera, rangefinder.

In an advantageous embodiment, a virtual model of an environment of the vehicle is created, via a virtual model module, based upon the additional sensor data, whereas the virtual model includes at least road users and a prediction of their paths of motion within the environment of the vehicle. Said virtual model supports the detection module to detect the event.

In the context of this disclosure, the environment of the vehicle is defined as an area of up to 500m around the vehicle. The virtual model might be realized as a software component in which each road user in the environment of the vehicle is digitally represented. Based on the additional sensor data, a prediction of the path of motion for each road user can be computed. Once the paths of motion for each road user are known, an event can be detected via an appropriate pattern. For example, the path of motion of a road user might indicate a collision with the vehicle, if no countermeasure is taken.

In an advantageous embodiment, supplementary data is used to create the virtual model of the environment of the vehicle, whereas the supplementary data is one of or a combination of the following: map data, navigation data, weather data, traffic data, or data provided by other road users within the environment of the vehicle.

For example, navigation data can be used to predict the path of motion of the vehicle and/or the paths of motion of the other road users more precisely, hence enhancing the accuracy of the detection of events.

In an advantageous embodiment, in addition to the graphical highlighting of events, a sound is played via a sound module.

This embodiment is advantageous because multiple sources call the attention of the driver to an event, enhancing the probability that the event is noticed by the driver of the vehicle.

A second aspect of the present disclosure introduces an attention calling system for calling the attention of a driver of a vehicle to events in a blind spot of the vehicle caused by an opaque structure of the vehicle body, the system being formed to carry out the steps of the aforementioned method. The system comprises a receiving module, formed to receive image data recorded by at least one camera that covers the blind spot of the vehicle, a detection module, formed to detect an event based on a pre-defined pattern within the received image data, a modification module, formed to modify the image data recorded by the at least one camera into a modified image, such that the event is highlighted, and at least one display module, which is formed to show said modified image, whereas the display module is arranged on the opaque structure of the vehicle body on the inside of the vehicle.

Any module might be provided as an individual system connected to the other modules when necessary to enable the exchange of data. However, some or all modules can also be an integrated part of a bigger system, sharing certain subcomponents. For example, a system with a processing unit as a subcomponent provides the modules to detect and modify the recorded image data, i.e., the detection and modification module.

All advantages that have been described for the disclosed attention calling method also apply for the attention calling system.

A third aspect of the present disclosure introduces a display system in a vehicle, whereas an opaque structure of the vehicle body causes a blind spot to an occupant of the vehicle. The display system comprises at least one gesture sensor, which is formed to generate gesture data representing detected gestures of the occupant of the vehicle, an image generation module, which is formed to generate a first content image and a second content image, whereas the second content image is time-consecutive to the first content image, whereas the second content image is generated based on the gesture data. The display system further comprises at least one display module, whereas the display module is arranged on the opaque structure of the vehicle body on the inside of the vehicle, whereas the at least one display module is formed to show the first and second content image consecutively.

The at least one gesture sensor can for example be a voice detection/speech recognition sensor, a hand gesture sensor, or an eye movement sensor. The at least one gesture sensor detects gestures of the occupant of the vehicle, generating gesture data representing the detected gesture. For example, a speech recognition sensor could detect, that a key word has been spoken by the occupant. In another example, a hand gesture sensor could detect that the occupant made a swipe-to-the-right gesture.

The gesture data is then transmitted to the image generation module, which can generate a first content image and a second content image, which are time consecutive. In other words, the first content image and the second content image are the frames of a content.

For example, the content could be a map. In this example, the first content image generated by the image generation module could be the map according to the current position of the vehicle and certain default values like a zoom level. The gesture data can be commands given by the occupant of the vehicle to operate the map. Commands could be "zoom in", "zoom out", or "move the map to the left/right/up/down". The gesture data could also include commands like "navigate to the next restaurant". The image generation module can then generate the second content image, in other words, the next frames, based on the command given by the occupant of the vehicle. The display module will then show the second content image. The steps to generate and display the first and second content image is repeated iteratively, such that the first content image is replaced by the second content image for the subsequent iteration. In this way, the gesture of the occupant can be translated into a smooth display of consecutive content images.

In an advantageous embodiment, the at least one gesture sensor can be chosen out of the group of the following sensor types: line-of-sight-detection sensor, hand-gesture sensor, touch sensor, speech recognition sensor, proximity sensor, or camera.

For example, the line-of-sight-detection sensor can track where the occupant looks and translate this information into how the second content image should be generated.

In an advantageous embodiment, the first and second content image represents a map, and the gesture sensor data controls the zoom level and/or position of said map.

In an advantageous embodiment, the first and second content image represent a photo library, and the gesture sensor data is used to browse through said photo library.

In an advantageous embodiment, the first and second content image represent a game, and the gesture sensor act as a gaming controller.

In an advantageous embodiment, the game controlled via the at least one gesture sensor is Pong and the at least one gesture sensor includes a line-of-sight-detection sensor which detects the line-of-sight of the occupant, whereas the paddles in the Pong game are controlled via the detected line-of-sight of the vehicle occupant.

In this embodiment, the line-of-sight-detection sensor detects, whether the occupant of the vehicle looks up or down. This gesture data is transmitted to the image generation module, which can then generate the second content image based upon said gesture data. If the detected gesture is a look up, the paddle of the pong game is moved up and the second content image reflects this change of the paddle position. The other paddle of the Pong game might be controlled by an artificial intelligence or by another occupant of the vehicle.

### Brief Description of the Drawings

The disclosed invention will be further discussed in the following based on preferred embodiments presented in the attached drawings. However, the disclosed invention may be embodied in many different forms and should not be construed as limited to said preferred embodiments. Rather, said preferred embodiments are provided for thoroughness and completeness, and fully convey the scope of the invention to the skilled person. The following detailed description refers to the attached drawings, in which:
Figure 1 depicts a schematic of an embodiment of an attention calling system for calling the attention of a driver of a vehicle;
Figure 2 depicts a schematic flow chart of an embodiment of a method for calling the attention of a driver;
Figure 3 depicts a bird's eye view of a first traffic situation, in which the method for calling the attention of a driver according to the embodiment of Fig. 2 is applied;
Figure 4 depicts a view from the inside of a vehicle of a second traffic situation, in which the attention calling system for calling the attention of a driver according to Fig. 1 is used;
Figure 5 depicts a schematic of an embodiment of a display system;
Figure 6 depicts a view from the inside of a vehicle, in which the embodiment of the display system according to Fig. 5 is used.

### Detailed Description of the Drawings

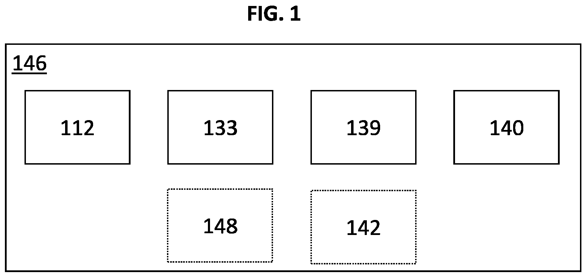

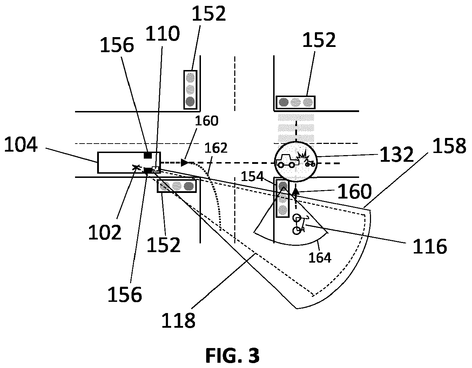

Figure 1 depicts a schematic of an embodiment of an attention calling system 146 for calling the attention of a driver 102 (shown in Fig. 3) of a vehicle 104 (shown in Fig. 3).

The system 146 comprises a receiving module 112, a detection module 133, a modification module 139, and a display module 140. Optionally, the system 146 may comprise a sound module 142 and/or a virtual model module 148. The optionality is indicated by non-solid lines.

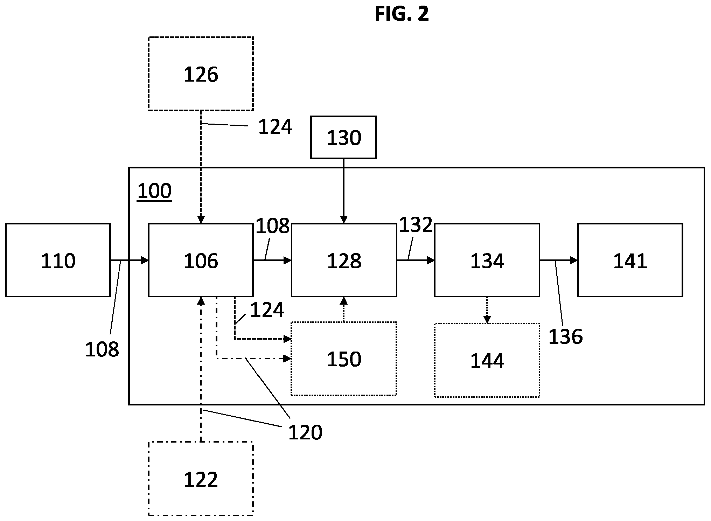

Figure 2 depicts a schematic flow chart of an embodiment of a method 100 for calling the attention of a driver 102 (shown in Fig. 3). The aforementioned system 146 is formed to carry out said method 100.

The method 100 for calling the attention of a driver 102 comprises four steps: a receiving step 106, a detection step 128, a modification step 134, and a display step 141.

If the sound module 142 (shown in Fig. 1) is provided, the method 100 further comprises a sound alert step 144. If the virtual model module 148 (shown in Fig. 1) is provided, the method 100 further comprises a virtual model generation step 150.

The method 100 further comprises a pre-defined pattern 130 and a camera 110. Optionally, the method 100 may comprise an external data provider 126 and/or one or more sensors 122. The optionality is indicated by non-solid lines.

The camera 110 can be mounted inside or outside of the vehicle 104 (shown in Fig. 3) or might even be part of other infrastructure elements like roadside units or other road users 116.

In the first step of the method 100, receiving step 106, image data 108 are recorded by the camera 110 and transmitted to the receiving module 112. The image data 108 are images from a blind spot 118 (shown in Fig. 3) of the vehicle 104. The receiving module 112 can optionally be formed to receive, in addition to the image data 108, additional sensor data 120 from one or more sensors 122 and/or external data 124 from one or more external data providers 126 in the receiving step 106. The receiving step 106 is carried out by the receiving module 112 (shown in Fig. 1).

In the next step, detection step 128, the pre-defined pattern 130 is used to detect an event 132 within the image data 108. If additional sensor data 120 and/or external data 124 have been received in the receiving step 106, they will also be used in the detection step 128 in addition to the pre-defined pattern 130 to detect the event 132. The detection step 128 is carried out by the detection module 133 (shown in Fig. 1).

A pre-defined pattern 130 could for example be a landmark or a place of interest, a collision with another road user 116, a road sign, an object within the driving path of the vehicle 104, or the like. An example for the use of a pre-defined pattern 130 will be explained in greater detail below with reference to Fig. 3.

In the detection step 128, this pre-defined pattern 130 is identified using the image data 108 and, if available, sensor data 122 and/or external data 124. The detection step 128 might employ artificial intelligence (AI) software like a neural network to identify the pre-defined pattern 130. Said neural network could be trained with a suitable set of test images to ensure that the pre-defined pattern 130 is identified properly. The location of the event 132 being within the blind spot 118 follows from the camera 110 covering said blind spot 118.

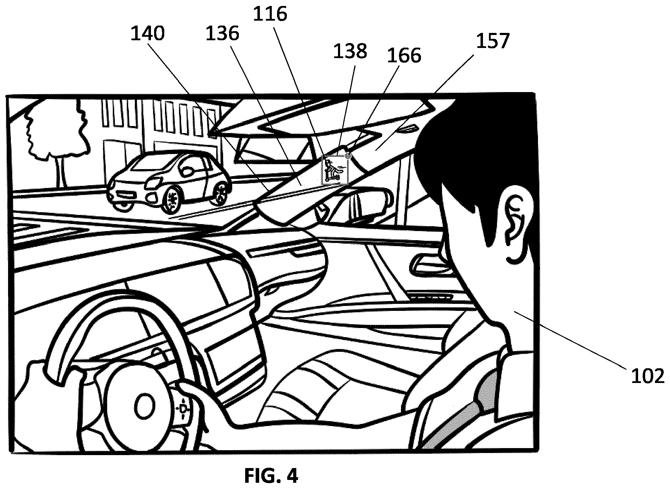

In the next step, modification step 134, the image data 108 is modified into a modified image 136 based on the detected event 132 during the previous detection step 128. The aim of the modification is to call the driver's 102 attention to the event 132 in order to allow the driver 102 to take an appropriate countermeasure. In the case that the detected event 132 is a road user 116 located in the blind spot 118 of the vehicle 104, an appropriate countermeasure could be to wait until the bicycle driver 102 has passed the vehicle 104 before taking a turn, or simply driving more attentively. For the purpose to call the driver's 102 attention to the event 132, the event 132 is highlighted. The highlighting can be achieved, for example, by drawing a frame 138 (shown in Fig. 4) in a noticeable color around the event 132. The frame 138 might also be drawn blinking to attract the attention of the driver 102 more instantly. The modification step 134 is carried out by the modification module 139 (shown in Fig. 1).

To notify the driver 102 of the vehicle 104 about the event 132, the modified image 136 is shown on the display module 140 in the next step, display step 141. Optionally, it is possible to notify the driver 102 about the event 132 by playing a sound via the sound module 142 in the sound alert step 144.

Figure 3 depicts a bird's eye view of a first traffic situation, in which the method 100 for calling the attention of a driver 102 according to the embodiment of Fig. 2 is applied.

The bird's eye view of a traffic situation includes a vehicle 104, a road user 116, traffic lights 152, a specific traffic light with a build-in Lidar sensor 154, and a crosswalk. A blind spot 118 for the driver 102 of the vehicle 104 is caused by an opaque structure 156 of the vehicle 104. Therefore, the driver 102 cannot directly see into the blind spot 118. A camera 110 is mounted on the vehicle 104 whose field of view 158 is directed to the blind spot 118 and sufficient to cover said blind spot 118. In other words, the camera 110 is able to record images from the blind spot 118.

The camera 110 continuously records images from the blind spot 118, producing image data 108. In the example of Fig. 3, the pre-defined pattern 130 of a bicycle is used to train a neural network to detect whether a bicycle is contained in the image data 108 or not. In this way, bicycles inside the blind spot 118 can be detected. In the case a bicycle is detected in the blind spot 118, the driver can be alerted appropriately by highlighting (shown in Fig. 3) the bicycle on the display module 140.

The method 100 can be formed to detect a multitude of different events 132. For example, this can be achieved by using a suitable neural network that can detect a multitude of different pre-defined patterns 130.

Optionally, a virtual model can be created in a virtual model module 148 based on additional sensor data 120 and/or external data 124. The virtual model at least includes other road users 116 and their path of motion 160, 162 (depicted as dashed lines). In the example of Fig. 3, a bicycle is the only other road user 116. Based on its path of motion 160 and the path of motion 160 of the vehicle 104, an event 132 is detected, in particular a collision. To indicate the danger of the collision event 132, the bicycle is highlighted on the display module 140.

However, if navigation data from the vehicle 104 is considered, a different path of motion 162 for the vehicle 104 is more likely to be followed (depicted as a dotted line). In the example of Fig. 3, under consideration of navigational data, the vehicle 104 is likely to turn right, hence a collision is not likely. In this case, the highlighting can be more subtle or skipped completely.

Figure 3 also shows how external data 124 can be used to support the detection step 128. The traffic light with a built-in Lidar sensor 154 has its own field of view 164. Therefore, this traffic light 154 can also detect the road user 116 and its position and/or path of motion 160. This data can be forwarded to the attention calling system 146 of the vehicle 104 which in turn can use this data to inform the driver 102 of the vehicle 104 about the road user 116. It is advantageous that in this case, the road user 116 is detected even if the camera's field of view 158 is restricted, for example due to a huge object.

Figure 4 depicts a view from the inside of a vehicle 104 of a second traffic situation, in which the attention calling system 146 for calling the attention of a driver 102 according to Fig. 1 is used.

A road user 116 is driving within the blind spot 118 of the vehicle 104, caused by the opaque A-pillar 157 of said vehicle 104. However, a display module 140 is mounted on the A-pillar 157, showing a modified image 136 of the blind spot 118 recorded by a camera 110. The modified image 136 clearly highlights the road user 116, in this case a scooter driver, by a frame 138 and a marker 166, calling the attention of the driver 102 to this possible source of a dangerous traffic situation.

Even with no event 132 within the blind spot 118 detected, the display module 140 can show image data 108 of the blind spot 118 or modify it to fit the drivers 102 eye position. It is also possible to indicate other relevant information on the display module 140 like upcoming inspections, low gasoline/battery, navigation instructions, or the like.

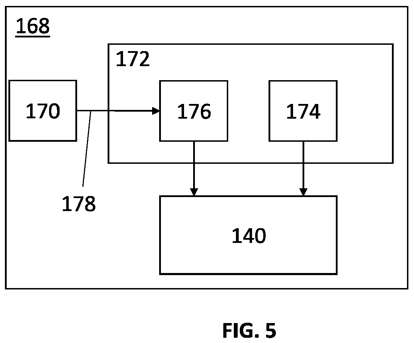

Figure 5 depicts a schematic of an embodiment of the display system 168. The display system 168 comprises a gesture sensor 170, an image generation module 172, and a display module 140. The image generation module 172 is formed to generate a first content image 174. It is also formed to generate a second content image 176 based on gesture data 178 generated by the gesture sensor 170. Both the first and second content image 174, 176 are transferred to the display module 140 which shows them consecutively.

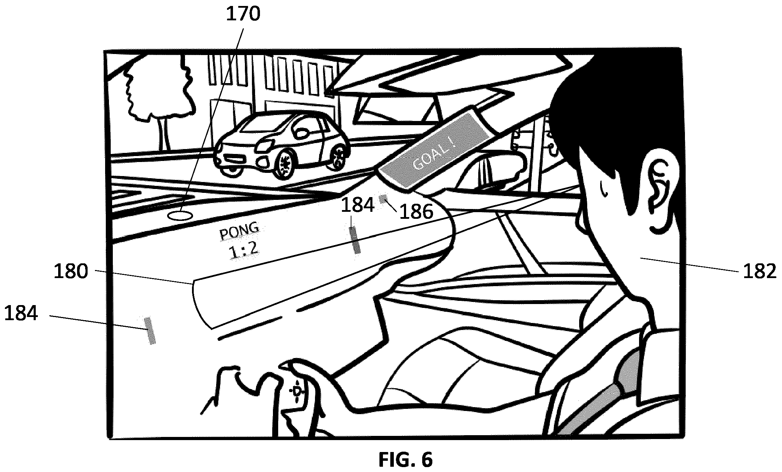

Figure 6 depicts a view from the inside of a vehicle, in which the embodiment of the display system according to Fig. 5 is used. In particular, Fig. 6 depicts how to utilize the display system 168 to play the game Pong.

In the example of Fig. 6, the gesture sensor 170 is a line-of-sight-detection sensor which detects the line-of-sight 180 of the occupant 182 of the vehicle 104. The occupant 182 plays the game Pong in which two paddles 184 must be moved up or down in order to hit the ball 186 to the opposing side. The line-of-sight-detection sensor 170 detects whether the occupant 182 looks up or down. The image generation module 172, which receives the gesture data 170, translates said gesture data 170 into a game control command. A look up might correspond to move the paddle 184 up while a look down might correspond to move the paddle 184 down.

The image generation module 172 is able to produce the first content image 174, which initially shows the starting position of the game in which both paddles might be centered vertically on opposing sides. The image generation module 172 is further able to generate a second content image 176 based on the gesture data 170. The second content image 176 is supposed to be shown consecutively after the first content image 174. In the example of Fig. 6, when the detected gesture is to move the paddle up, the second content image 176 will contain a paddle that has slightly been moved up compared to the first content image 174.

For the next step in time, the first content image 174 is replaced by the second content image 176 and the new second content image 176 will be generated based on the detected gesture as a slightly changed version of the first content image 174 from the previous time step. Repeating these steps of image generation and showing the first content image 174 and the second content image 176 consecutively on the display module 140 allows the occupant 182 to command the game paddles via his or her eyes.

### List of Reference Signs

- 100: Method
- 102: Driver
- 104: Vehicle
- 106: Receiving step
- 108: Image data
- 110: Camera
- 112: Receiving module
- 114: Roadside unit
- 116: Road user
- 118: Blind spot
- 120: Additional sensor data
- 122: Sensor
- 124: External data
- 126: External data provider
- 128: Detection step
- 130: Pre-defined pattern
- 132: Event
- 133: Detection module
- 134: Modification step
- 136: Modified image
- 138: Frame
- 139: Modification module
- 140: Display module
- 141: Display step
- 142: Sound module
- 144: Sound alert step
- 146: System
- 148: Virtual model module
- 150: Virtual model generation step
- 152: Traffic light
- 154: Traffic light with build-in Lidar sensor
- 156: Opaque structure
- 157: A-pillar
- 158: Camera's field of view
- 160: Path of motion
- 162: Path of motion under consideration of navigation data
- 164: Lidar's field of view
- 166: Marker
- 168: Display system
- 170: Gesture sensor
- 172: Image generation unit
- 174: First content image
- 176: Second content image
- 178: Gesture sensor data
- 180: Line of sight
- 182: Occupant
- 184: Paddle
- 186: Ball

## Claims

1. A method (100) for calling the attention of a driver (102) of a vehicle (104) to events (132) in a blind spot (118) of the vehicle (104) caused by an opaque structure (156) of the vehicle (104), comprising the steps:
a) receiving, via a receiving module (112), image data (108) recorded by at least one camera (110) that covers the blind spot (118) of the vehicle (104),
b) detecting, via a detection module (133), an event (132) based on a pre-defined pattern (130) within the received image data (108),
c) modifying, via a modification module (139), the image data (108) recorded by the at least one camera (110) into a modified image (136), such that the event (132) is highlighted,
d) showing said modified image (136) on at least one display module (140), whereas the display module (140) is arranged on the opaque structure (156) of the vehicle (104) on the inside of the vehicle (104).

2. The method according to claim 1, whereas the pre-defined pattern (130) is one or more from the following group: a landmark, a passenger to be picked up, a collision with a road user (116), a road sign, an overtaking attempt from a road user (116), an object within the driving path of the vehicle (104), or a place of interest.

3. The method according to claim 1 or 2, whereas the highlighting of the event is achieved by drawing one or more from the following group: a frame (138), an icon, a marker (166), a road sign, a text, an avatar, a person, a vehicle, or a building.

4. The method according to one of the preceding claims, whereas in step a), additional to receiving image data (108) recorded by the at least one camera (110), external data (124) is received by the receiving module (112), whereas in step b), said external data (124 support the detection module (133) to detect the event (132) and whereas the external data (124) can be provided by any of the following: a web service, a map service, a navigation/traffic service, a weather service, a traffic an advertising service, other road users, or the road infrastructure.

5. The method according to one of the preceding claims, whereas in step a), additional to receiving image data (108) recorded by the at least one camera (110), additional sensor data (120) from at least one sensor (122) is received by the receiving module (112), and whereas in step b), said additional sensor data (120) support the detection module (133) to detect the event (132).

6. The method according to claim 5, whereas the additional sensor data (120) from the at least one sensor (122) can be chosen out of the group comprising the following sensor types: line-of-sight-detection sensor, Lidar sensor, Radar sensor, pressure sensor, temperature sensor, camera, rangefinder.

7. The method according to claim 5 or 6, whereas a virtual model of an environment of the vehicle (104) is created, via a virtual model module (148), based upon the additional sensor data (120), whereas the virtual model includes at least road users (116) and a prediction of their paths of motion (160) within the environment of the vehicle (104), whereas said virtual model supports the detection module (133) to detect the event (132).

8. The method according to claim 4 and 7, whereas also the external data (124) is used to create the virtual model of the environment of the vehicle (104).

9. The method according to one of the preceding claims, whereas in addition to the graphical highlighting of events (132), a sound is played via a sound module (142).

10. An attention calling system (146) for calling the attention of a driver (102) of a vehicle (104) to events (132) in a blind spot (118) of the vehicle (104) caused by an opaque structure (156) of the vehicle (104) body, the system (146) being formed to carry out the steps of the method (100) of one of the preceding claims, the system (146) comprising:
a) a receiving module (112), formed to receive image data (108) recorded by at least one camera (110) that covers the blind (118) spot of the vehicle (104),
b) a detection module (133), formed to detect an event (132) based on a pre-defined pattern (130) within the received image data (108),
c) a modification module 139), formed to modify the image data (108) recorded by the at least one camera (110) into a modified image (136), such that the event (132) is highlighted,
d) at least one display module (140), which is formed to show said modified image (136), whereas the display module (140) is arranged on the opaque structure (156) of the vehicle (104) body on the inside of the vehicle (104).

11. A display system (168) in a vehicle (104), whereas an opaque structure (156) of the vehicle (104) body causes a blind spot (118) to an occupant (182) of the vehicle (104), the display system (168) comprising:
a) at least one gesture sensor (170), which is formed to generate gesture sensor data (178) representing detected gestures of the occupant (182) of the vehicle (104),
b) an image generation module (172), which is formed to generate a first content image (174) and a second content image (176), whereas the second content image (176) is time-consecutive to the first content image (174), whereas the second content image (176) is generated based on the gesture data (178),
c) at least one display module (140), whereas the display module (140) is arranged on the opaque structure (156) of the vehicle (104) body on the inside of the vehicle (104), whereas the at least one display module (140) is formed to show the first (174) and second content image (176) consecutively.

12. The display system according to claim 11, whereas the at least one gesture sensor (170) can be chosen out of the group of the following sensor types:
line-of-sight-detection sensor, hand-gesture sensor, touch sensor, proximity sensor, or camera.

13. The display system according to claim 11, whereas the first (174) and second content image (176) represents a map, and the gesture sensor data (178) controls the zoom level and/or position of said map.

14. The display system according to claim 11, whereas the first (174) and second content image (176) represent a photo library, and the gesture sensor data (178) is used to browse through said photo library.

15. The display system according to claim 11, whereas the first (174) and second content image (176) represent a game, and the gesture sensor (170) acts as a gaming controller.

16. The display system according to claim 15, whereas the game is Pong and the at least one gesture sensor (170) includes a line-of-sight-detection sensor which detects the line-of-sight of the occupant (182), whereas the paddles (184) in the Pong game are controlled via the detected line-of-sight of the vehicle occupant (182).
